(19) **Europäisches Patentamt** / **European Patent Office** / **Office européen des brevets**

(11) **EP 2 393 890 B1**

(12) **EUROPEAN PATENT SPECIFICATION**

(45) Date of publication and mention
of the grant of the patent:
**14.08.2013 Bulletin 2013/33**

(51) Int Cl.:
***C09D 105/00*** (2006.01)   ***C09D 189/00*** (2006.01)

(21) Application number: **10706770.4**

(22) Date of filing: **25.01.2010**

(86) International application number:
**PCT/IT2010/000016**

(87) International publication number:
**WO 2010/089787 (12.08.2010 Gazette 2010/32)**

(54) **COATINGS FROM NATURAL MACROMOLECULES, WITH GAS BARRIER PROPERTIES TAILORED IN SITU, AND RELATED PREPARATION METHOD**

BESCHICHTUNGEN AUS NATÜRLICHEN MAKROMOLEKÜLEN MIT GASBARRIEREEIGENSCHAFTEN, DIE VOR ORT ZUGESCHNITTEN WERDEN, UND ZUGEHÖRIGES HERSTELLUNGSVERFAHREN

REVÊTEMENTS FORMÉS À PARTIR DE MACROMOLÉCULES NATURELLES PRÉSENTANT DES PROPRIÉTÉS DE BARRIÈRE AUX GAZ AJUSTÉES IN SITU ET PROCÉDÉ DE PRÉPARATION CORRESPONDANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.02.2009 IT MI20090126**

(43) Date of publication of application:
**14.12.2011 Bulletin 2011/50**

(73) Proprietor: **Mirante S.r.l.**
**23900 Lecco (LC) (IT)**

(72) Inventors:
- **FARRIS, Stefano**
  **I-07041 Alghero (SS) (IT)**
- **PIERGIOVANNI, Luciano**
  **I-20090 Rodano (MI) (IT)**
- **RONCHI, Giovanni**
  **I-20044 Bernareggio (MI) (IT)**
- **ROCCA, Roberto**
  **I-20040 Roncello (MI) (IT)**
- **INTROZZI, Laura**
  **I-22072 Cermenate (CO) (IT)**

(74) Representative: **Incollingo, Italo**
**Piazzale Lavater, 3**
**20129 Milano (IT)**

(56) References cited:
**EP-A- 1 256 598     EP-A- 1 857 498**
**WO-A-97/23390     WO-A-03/082995**
**DE-A1- 19 834 228**

- **RINDLAV-WESTLING ET AL: "Structure, mechanical and barrier properties of amylose and amylopectin films" CARBOHYDRATE POLYMERS, APPLIED SCIENCE PUBLISHERS, LTD. BARKING, GB, vol. 36, no. 2-3, 1 July 1998 (1998-07-01) , pages 217-224, XP005001952 ISSN: 0144-8617**
- **ARVANITOYANNIS ET AL: "Edible films made from hydroxypropyl starch and gelatin and plasticized by polyols and water" CARBOHYDRATE POLYMERS, APPLIED SCIENCE PUBLISHERS, LTD. BARKING, GB, vol. 36, no. 2-3, 1 July 1998 (1998-07-01) , pages 105-119, XP005001941 ISSN: 0144-8617**

## Description

The present invention relates to coatings basically from natural macromolecules, with gas barrier properties that may be tailored *in situ,* intended as coatings for plastic substrates, especially films, sheets, and tri-dimensional objects, for many different applications, in particular the food and biomedical fields. More specifically, the invention concerns natural matrices (gelatin, chitosan, chitin, pectin, gluten, casein, zein, whey protein, carrageenan, guar gum, xanthan gum, alginate, starch, cellulose in its different forms) that can be blended with inorganic substances (metal alkoxides) and synthetic polymers (polyvinyl alcohol, polyvinyl acetate, ethylenvinyl alcohol, ethylenvinyl acetate) to generate, through a well-defined and controlled process, hybrid structures as transparent coatings, characterized by very high barrier property against gases (oxygen in particular) and strong adhesion to the plastic substrate.

## BACKGROUND OF THE INVENTION.

Safety and security are nowadays two major forefront topics, especially within those fields linked to the human health, such as the food and medical ones. In this direction, enormous efforts are continuously being performed in order to guarantee the best conditions in terms of hygiene and security of foodstuffs and medical devices. It is therefore easy to understand the pivotal role of the primary package in protecting the contained item against detrimental external factors like the microbiological contamination, the permeation of gases and vapors, which may contribute to accelerate some adverse reactions. For this reason, packaging materials are requested to possess the best performance in terms of barrier properties. This is especially true for the plastic packaging, since they exhibit poor general barrier properties when compared to glass and metal materials. Among the different routes pursued to enhance the barrier properties of plastics, depositing thin layers is one of the most valuable. This is because such layers, called coatings, are capable of improving the barrier properties of the plastic substrate even though applied as very thin layers (i.e., with thickness ranging from some hundred nanometers to few microns). At present, the most widely coatings used are those based on polyvinyl alcohol (PVOH), ethylenvinyl alcohol (EVOH), polyvinylidene chloride (PVDC), and acrylates. For all these solutions (marketed by specific trade marks) exist many references within the patent literature, and citing all of them would be a hard task. It is however worth noting that in all cases such coatings are obtained by a synthetic process on monomers of fossil origin. Only recently have been reported new solutions where the hydrocarbon structure is blended to an inorganic component

## PRIOR ART.

PCT Publication (WO/2007/042993) describes the method to obtain a laminate structure based on a plastic film and a hybrid coating, i.e. made of an organic component (polyvinyl alcohol) and an inorganic matrix (metal alkoxide). The final structure is characterized by very high barrier properties against oxygen even at high external moisture conditions. Similarly, EP Patent 1 348 747 A1 discloses a method to obtain barrier coatings at high and low hygrometric conditions. In this case, the coating is made of polyvinyl alcohol, a metal alcoholate and a organosilane. US Patent 2002/0197480 describes instead a laminate structure including a gas barrier plastic film and a hybrid coating made of a polyvinylic resin, a Si-alkoxide hydrolyzed, and polyethylene oxide. Such a structure is claimed to have excellent gas barrier properties even at high humidity conditions. JP Patent 7126419 provides details on the obtainment of a laminate structure with excellent barrier properties against gases and water vapour, together with high resistance to humidity and heat Such a structure is composed by three layers: a plastic polymer as a substrate, a metal alkoxide ( or its hydrolyzed), and tin chloride. Also this structure is defined as hybrid due to the simultaneous presence of organic and inorganic matrices. JP Patent 62295931 describes materials and procedures to produce an inorganic coating having excellent gas barrier properties, obtained from an aqueous or either alcoholic solution of a metal alkoxide deposited onto thermoplastic resins such as PVC, PS, PP o PVA. PCT Publication (WO/2005/053954) describes a hybrid coating obtained by using a metal alkoxide and a synthetic polymer containing carboxylate groups (-COO⁻) partially neutralized. Such a structure exhibits very low gas permeability values regardless the external relative humidity conditions, even after retort process.

Even with many merits, barrier coatings described in the literature are not exempt from some negative aspects, which dictate, especially for some specific applications, lack of universality. In particular.

- coatings are exclusively obtained using synthetic polymers originating from fossil fuels; in a few cases, an inorganic component (prevalently represented by a metal alkoxide) is also added;
- it has never been either cited nor reported the possibility of modulating the gas barrier performance in response to well defined external stimuli (namely temperature, pH, relative humidity). Indeed, whole prior art describes excellent barrier properties, which are kept constant regardless the external relative humidity and temperature conditions.

Nevertheless, for specific applications such a behaviour represents a negative feature.

## SUMMARY OF THE INVENTION AND BRIEF DESCRIPTION OF THE DRAWINGS

First aim of this invention is to provide coatings having gas barrier properties with special features unknown to the prior art, thus able to afford some advantages in respect to the solutions nowadays available, overcoming in this way the aforementioned lacks of the prior art.

Other aim is to provide specific preparation methods, involving specific manufacturing and economic advantages.

Further goal is to provide specific applications, which would allow exploiting efficiency the functional properties of the invention, with special emphasis to the biomedical/pharmaceutical and food packaging fields.

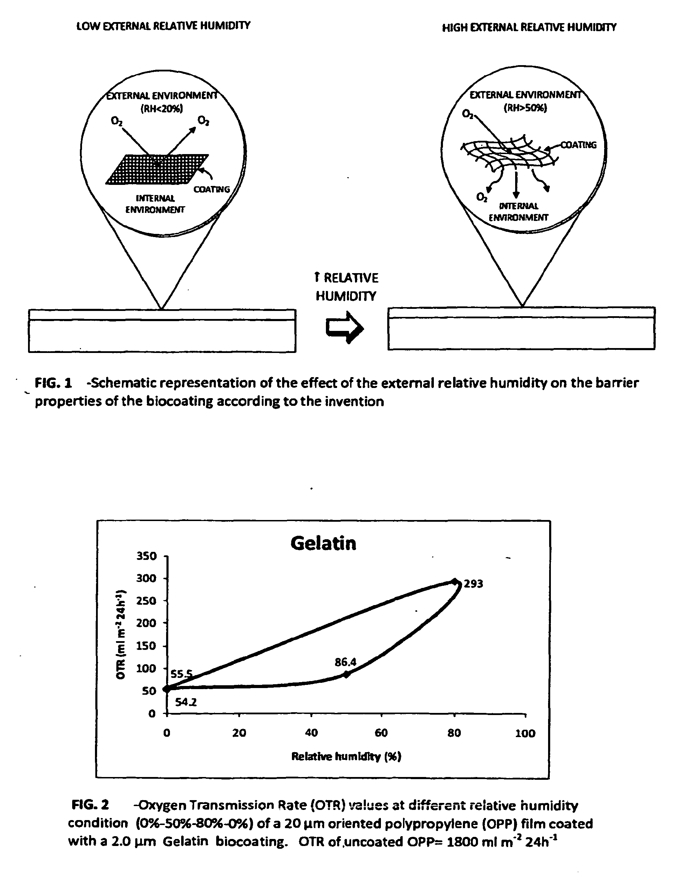

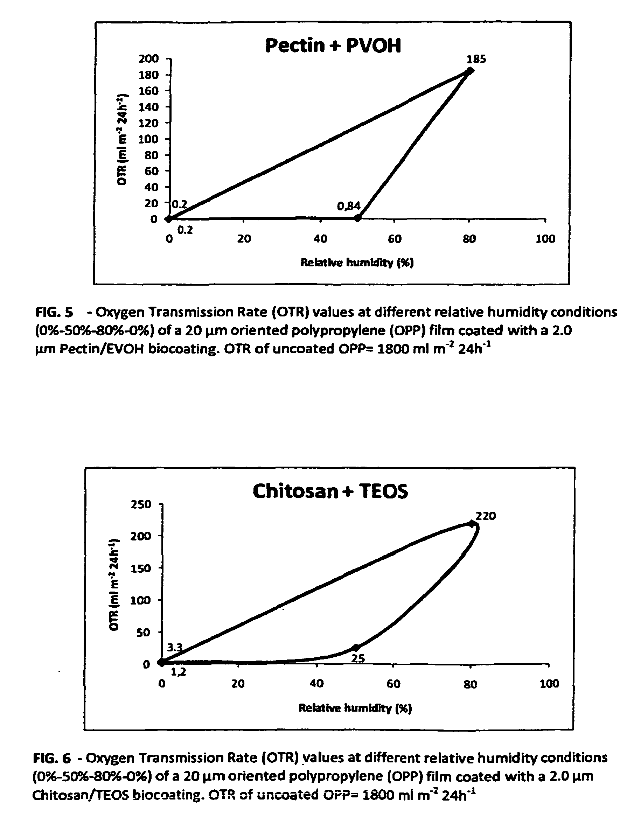

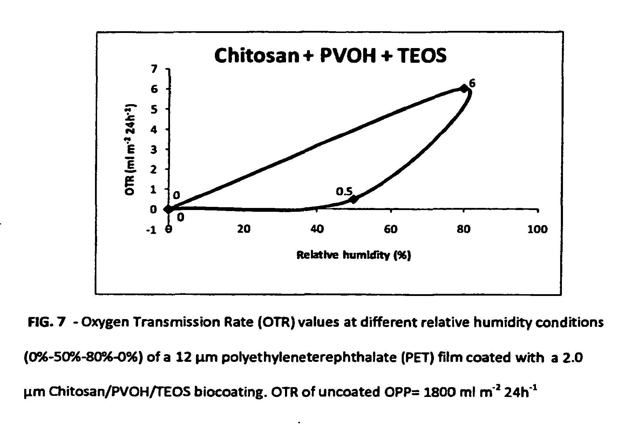

The most important features of the invention are recited in the claims which are considered herein incorporated. Aspects and advantages of the invention will more clearly appear from the following description of the preferred embodiments which refer to figures 1-7, diagrams of the performances of the products and methods according to the invention. In particular, Figure 1 shows the basic mechanism governing the possibility of modulating *in situ* the gas barrier property of the bio-coating which is subject of the present invention. Figures 2-4, highlight the oxygen barrier properties, in terms of oxygen transmission rate (OTR), of three different coatings obtained by using three different starting bio-macromolecules to produce the bio-coatings then deposited onto a 20 $\mu$m oriented polypropylene. Figure 5 depicts the effect on the OTR arising from a slight addition of ethylenvinyl alcohol to the original pectin-based coating formulation. Figure 6 illustrates the effect on the OTR of a 20 $\mu$m oriented polypropylene due to the addition of a small amount of a metal alkoxide represented by the formula $M^1(OR)^1$ ($M^1$ = Si) to the starting formulation of a chitosan-based bio-coating. Finally, in Figure 7 are summarized the OTR results obtained after the deposition of a coating onto a 12 $\mu$m polyethylene terephthalate film. More specifically, the coating is made by blending the structuring component (ethylenvinyl alcohol) and a metal alkoxide (TEOS), both in percentage of (8%), i.e. higher than the bio-macromolecule chitosan (1%).

## DETAILED DESCRIPTION OF THE INVENTION.

This invention provides methods for obtaining coatings of natural origin with innovative properties and their applications on substrates. According to a feature of the invention, an optimal adhesion to the substrates is reached thanks to the selection of specific natural macromolecules belonging to the categories of proteins and polysaccharides. Among proteins, this invention foresees the following molecules: gelatin (porcine, bovine, fish), gluten, casein, whey protein. The use of pigskin gelatin as a protein is more favourable. Among polysaccharides, this invention envisages the use of the following molecules: chitosan, chitin, pectin, carrageenan, guar gum, xanthan gum, alginates, starch, and cellulose in its different forms. Preferably, pectin and chitosan are used as polysaccharides. Possibly, to obtain the coating subject of this invention, molecule of not natural origin may be used, such as ethylenvinyl alcohol (EVOH) and polyvinyl alcohol (PVOH) as structuring agent, preferably the first one, and a metal alkoxide as reinforcing agent. In this last case, the tetraethyl orthosilicate (TEOS) is preferred. The solvent will be always represented by water.

Among the many benefits arising from the new matrices, we only refer to those related to their characteristics and properties which are better than those of films without the invention (uncoated) and also existing synthetic coatings.

Indeed, when applied as a coating, the matrix of the invention:

1) exhibits gas barrier properties that can be deliberately modified *in situ* in response to specific external stimuli, such as relative humidity and temperature. Surprisingly, the targeted barrier property recovers its original value as the trigger is switched off. This feature makes the invention unique in the field, since the gas barrier coatings described in the prior art show barrier properties that can be properly defined *static,* i.e. characterized by values that do not change over time as a response to external triggers, such as the environment surrounding the packaging of a food item or of a syringe for medical purposes. The possibility of controlling the gas barrier property by means of a mechanism "ON-OFF" - type is deemed of utmost importance for all those applications requiring the control of the permeation rate of gas and vapours across the packaging;

2) exhibits strong adhesion to the substrates even in absence of any of the common physical-chemical pre-treatment normally used to activate the surface (corona discharge, plasma, flame treatment, chemical primers);

3) increases the transparency of the films acting as a substrate; this is a very important feature, especially from an aesthetic point of view;

4) according to the invention, the coating obtained can be defined as a 'green coating', since it accounts mostly of bio-macromolecules. This aspect appears of primary importance since it falls in the concept of 'packaging optimization', which is based on the opportunity of using the common plastic packaging materials to a minor extent without compromising the final performance of the ultimate package, rather achieving the final goal of dumping a less amount of wastes into the environment. The concept of 'packaging optimization' answer the continuously increasing request for new solutions with a low environmental impact during the waste disposal operations.

Coatings produced according to this invention answer this request accordingly.

According to a first feature of the invention, said matrices comprise:

- as natural molecules of protein origin:

    1. gelatin, from pigs, cows or fishes, the pigskin one being to be preferred, characterized by a Bloom value ranging between 30 e 250;
    2. wheat gluten, with a protein content between 70% and 85%, starch content between 7% and 12%, lipids content less than 6%, cellulose content between 0.3% and 1%, ash content less than 1%, moisture content less than10%;
    3. casein, with protein content not less than 85%;
    4. zein from corn;
    5. whey proteins;

- as natural molecules of polysaccharide origin:

    1. pectin, obtained from citrus of apples, with a degree of esterification (DE) between 7 and 75 and with degree of amidation (DA) between 15 e 65;
    2. chitosan, with degree of deacetilation (DD) between 0.70 and 0.95;
    3. cellulose and its derivatives, i.e.: carboxymethyl-cellulose (CMC), methylcellulose (MC), hydroxypropyl-cellulose (HPC), hydroxypropylmethylcellulose (HPMC);
    4. alginates;
    5. carrageenan;
    6. guar gum;
    7. xanthan gum;

- as a structuring agent, it can be possibly used polyvinyl alcohol, with hydrolysis degree between 80% and 100%. Preferably, ethylenvinyl alcohol may be used, with hydrolysis degree between 80% and 100% and ethylene/vinyl ratio between 0 and 0.38. Its role is to provide ductility to the final coating structure;
- as a reinforcing agent, the metal alkoxide represented by the general formula $M^1(OR)^1$, with $M^1$ is a atom selected among Si e Al, and $R^1$ states for an alkyl group to be selected between methyl and ethyl. Alternatively or in combination to this component, also inorganic fillers may be used in the form of micrometric or nanometric platelets that, properly exfoliated, act as a physical obstacle to the molecules permeation across the final structure of the coating. To this purpose, clays like mica, cloisite, bentonite, vermiculite, kaolin, and dellite may be used.
  Generally speaking, such inorganic components have to be used when high resistance to the external relative humidity is required, thus avoiding that the barrier properties do not change by varying this parameter,
- as a catalyst, the bi-carboxylic oxalic acid $(COOH)_2$ has been selected, which makes it possible the metal alkoxide hydrolysis takes place;
- as a solvent of the whole reaction, only distilled water.

According to another aspect of the invention, the natural component (protein or polysaccharide) content will be in the range 0.1% - 20% ($^w$/w) when used alone. If both bio-macromolecules are used, the specific amounts will be defined according to the following relationship:

$$y = f(X_{prot.}) \qquad (1)$$

Equation 1 indicates that the amount of polysaccharide (y) to be used will always depend on the amount of protein (x). In one preferred embodiment the amount of polysaccharide is:

$$f\left(x_{prot.}\right) = \frac{\sqrt{x-1}}{x} \pm 0.2\% \qquad (2)$$

The other components would be used according to the specific quantities reported hereinafter:

- structuring agent: from 0.1 to 20% ($^w/_w$) of the total water solution;
- reinforcing agent: it will be added to the water solution so that the molar ratio between metal alkoxide and solvent (water) will be always between 1:15 e 1:7.2;
- catalyst: it has to be used in a concentration ranging between 0.001 M and 0.1 M.

The complement to 100% will be given by the solvent (H2O).

The easier and rapider method, thereby the preferred one, according to the invention to obtain the starting matrix (in the form of slurry) is as follows:

1. In a first tank is prepared the natural component. As a function of the selected bio-macromolecule, the dissolution process will be performed at room or high temperature. The pH value of the solution will be then adjusted depending on the starting bio-macromolecule.

2. At the same time, but in another tank, is prepared the water solution containing the structuring agent (if it is requested) at 90°C for 2 hours at a speed of 500 rpm. Later on, the water solution will be immediately cooled as long as 30°C will be reached.

3. In a third tank has to be prepared the reinforcing agent, which is put in an acid water solution according to the stoichiometric ratios aforementioned. This step has to be carried out at room temperature, at a speed of 1000 rpm. This hydrolysis process has to be considered complete after 4 hours. Such a frame time is significantly lower than what is reported in the prior art, thus allowing an optimization of the process to be achieved.

4. The so prepared matrices will be at this point blended according to this specific order: the natural component has to be added to the tank containing the structuring agent This mix will be kept stirring at 500 rpm for 1 hour. Only after this time will be added the reinforcing component. This final blend (natural component + structuring component + reinforcing component) will be stirred for 1 hour more at 500 rpm.

5. According to this invention, steps 2, 3 and 4 will be omitted if the final coating is obtained from only natural macromolecules (i.e., protein or polysaccharides).

The treatment *sub 1)* assures:

- if a protein is used as a natural macromolecule, the total denaturation of the structure, which in turn loses its tertiary conformation. In this way, early inaccessible sites are now available to form new bonds or interactions between the protein and other molecules. The pH adjustment is necessary to bring the protein to its isoelectric point, in order to make effective the electrostatic interactions with other charged molecules;
- if a polysaccharide is used as a natural macromolecule, the dissolution of the molecule within the solvent, which takes place by thermal treatment for some polysaccharide.

The treatment *sub 2)* assures the total dissolution of the structuring agent (ethylenvinyl alcohol or polyvinyl alcohol), through the breakage of the hydrogen bridges between different -OH groups along the skeleton of the molecule.

The treatment *sub 3)* assures the partial hydrolysis of the reinforcing component, making it possible the replacement of part of the alkoxid groups with the alcoholic groups to form the silanol (Si-OH) species.

The step *sub 4)* guarantees the interaction between the different matrices blended together. Such an interaction is characterized by intermolecular forces, especially hydrogen bonds.

The so obtained starting matrix (in the form of a sol), has to be obtained onto the plastic substrate, according to the invention. The method of deposition strictly relies on the specific substrate. For example, if the sol has to be deposited onto plastic films, the preferred way of deposition is the coating technique, which allows applying very thin layers in dry form. In this case, the sol will be placed in a large tank at controlled temperature (25°C) and continuously tranferred into a smaller basin (60 litres) by means of a dedicated pumps system. In this place, the sol is in turn moved to a rectangular basin of approximately 20 liters, where a metal engraved roll picks the sol up and spreads it on the plastic film, according to a well defined amount fixed by the number of engraves on the roll. The wet-coated plastic film undergoes at this point the drying effect of an array of infra-red lamps, immediately followed by a long slit where hot hair (90°C) is fluxed through, so that the residual humidity within the coating is pushed out. In this way, any potential phenomena of blocking in the rolls are avoided. The operation speed has to be $\geq$ 150 m min$^{-1}$, which is always higher than those reported in the prior art. Nevertheless, the coating according to this invention will result perfectly dried even at this speed.

In all those cases where the coating has to be applied onto surfaces different from flexible plastic films, one preferred method is the nebulization. For other items, the dipping method may represent the best way for the deposition of the coating.

The bio-polymeric matrix as described within this invention can find a wide variety of applications. Among them, those preferred are: 1) packaging of food items; 2) packaging of bio-medical devices. In both cases, the coating of this invention is intended as a replacement of the coatings commonly used so far.

In particular, the most characterizing feature of this invention relates to the possibility of modulate *in situ* the barrier property against gases of the coating once it has been deposited onto the plastic substrate, thanks to external triggers that modify the structure of the coating enabling to change the rate of permeation of gases and vapors. More specifically, in this invention the selected trigger is represented by the humidity of the surroundings. According to the procedure described previously, it is possible to develop coatings able to 'sense' more or less intensively the change in the values of the external relative humidity. The basic principle is illustrated in Figure 1, where increasing the relative humidity of the external environment the physical structure of the coating changes. In particular, it starts to 'open its web' due to the swelling phenomenon, which brings an increase in the intermolecular space and thus of the free volume of the matrix. As a final result, the matrix *self* will be more permeable to the gaseous species. Such a mechanism enables tailoring *in situ* (i.e., when the coating has been right deposited on the substrate) the permeability of the coating depending on the specific application. It is worth pointing out that the coating of this invention is able to recover its physical original structure when the trigger (humidity) gets off, i.e. the modulation of the permeability property is reversible. At the boundary of this arrays of solutions there are two distinct types of coatings: those which do not change their permeability properties up to very high humidity conditions (~ 80% RH) and those that, conversely, start 'sensing' the changes in humidity values at - 20% RH. Of course, the different behavior of the coatings will depend on the formulation, namely on the type of biopolymer used and if it has been/it has not been used the structuring and/or the reinforcing agent From a chemistry point of view, the tendency is to use molecules with hydrophilic groups in order to enhance the sensitivity to the external humidity. On the contrary, molecules with more hydrophobic group will be preferred if the resistance to humidity is the targeted goal. It has to be noticed that the coating deposited onto the plastic substrate not only improved its barrier properties against gas like oxygen, but brought relevant benefits as far as other functional properties are concerned. Among them, the best transparency of the final structure with respect to the uncoated substrate has to be mentioned In addition, the excellent adhesion of the coating to the substrate even at high relative humidity values deserves to be mentioned. This aspect is very important since it governs the delamination phenomena that can possibly take place once the coated substrate is coupled to another polymer usually through the lamination process (by means of an adhesive). The reason for such high adhesion properties lies in the use of biopolymers. Indeed, the established polarity of the majority of the functional groups along the macromolecule backbone as well as the presence of charged groups makes it possible to achieve this desired ultimate property.

### Examples

The examples described below emphasize the surprising characteristics and properties of the edible matrix according to the invention. In all the examples, reference is made to six different coating formulations, as shown in Table 1, deposited onto different plastic substrates commonly used in the food and biomedical packaging fields.

**Table 1. Percentage composition of the six different formulations as reported in the examples.**

| Bio-molecule | Formulations | | | | | |
|---|---|---|---|---|---|---|
| | 1 | 2 | 3 | 4 | 5 | 6 |
| *Protein* | Gelatin (5%) | Not used | Not used | Not used | Not used | Not used |
| *Polyssaccharide* | Not used | Pectin (5.0%) | Chitosan (5.0%) | Pectin (5.0%) | Chitosan (5.0%) | Chitosan (1.0%) |
| *Structuring (EVOH)* | Not used | Not used | Not used | 0.1% | Not used | 8% |
| *Reinforcing (TEOS)* | Not used | Not used | Not used | Not used | 1.0% | 8% |
| *Solvent* | 95.0% | 95.0% | 95.0% | 94.9% | 94.0% | 83% |
| Total | 100% | 100% | 100% | 100% | 100% | 100% |

The following analyses have subsequently been performed:

- **Thickness.** The thickness of the coating has been drawn by the mathematical equation:

$$G\,(gm^{-2}) = d\,(gcm^{-3}) \cdot L\,(\mu m)$$

which relates with each other three different parameters: grammage (G), density (d) and thickness (L).

From the above relationship it is easy to obtain the thickness as follows:

$$L = G \cdot d^{-1}$$

In practice, it is done by determining G by difference (the weight of 1 dm$^2$ of coated film - the weight of 1 dm$^2$ of uncoated film) and knowing that the density of the coating is equal to 1.05 gcm$^{-3}$. When possible, the thickness has been measured by a micrometer (Dialmatic Digital Indicator, Maplewood, NJ, 07040) to the nearest 0.001 mm at 10 different random locations.

-    ***Oxygen Transmission Rate (OTR)***. Such analysis has been performed according to the Standard Method ASTM D1434-88, by using a permeabilimeter OPT 5000 (Dansensor, Denmark). Measurements have been done at controlled thermo-hygrometric conditions: (T = 23°C; RH gradient = 0%, 50%, and 80%). Results from 10 replicates are expressed in ml m$^{-2}$ 24h$^{-1}$.
-    ***Transparency*** Transparency was determined according to ASTM D 1746-88 by using a spectrophotometer (Lambda 650-High performance-Perkin Elmer). In particular, the transparency of both uncoated and coated films was measured in terms of specular transmittance, i.e. the transmittance value obtained when the transmitted radiant flux includes only that transmitted in the same direction as that of the incident flux in the range 540-560 nm. The final values are expressed as a percentage (%) of the total incident radiation.

Table 2 summarizes the results obtained from the oxygen transmission rate and transparency analyses. **Tabella 2. OTR and transparency of the six different formulations reported in the examples.**

| | Property | |
|---|---|---|
| Formulation | OTR$^{\bullet}$ (ml m$^{-2}$ 24h$^{-1}$) | Transparency |
| 1 | 54.2 | 90.0 |
| 2 | 0.13 | 87.9 |
| 3 | 1.03 | 88.5 |
| 4 | 0.2 | 86.7 |
| 5 | 1.2 | 88.8 |
| 6 | 0 | 81.3 |

**\*23 °C; 0% UR**
**Transparency uncoated OPP = 91%**
**Transparency uncoated PET = 82%**

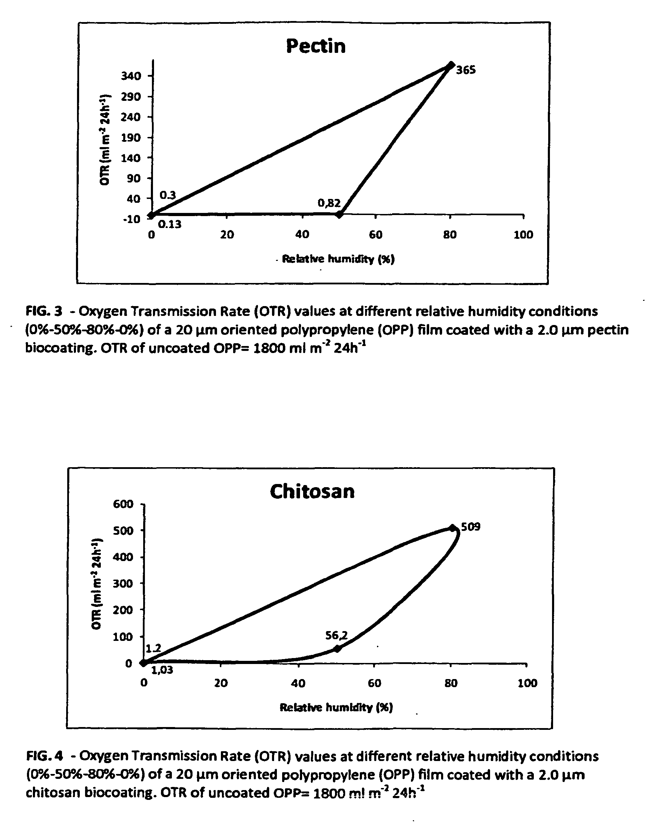

**Example 1**. It is herein described the oxygen barrier property of a 2.0 $\mu$m thick coating totally obtained from a bio-macromolecule, namely gelatin from pig skin. As it can be seen from Figure 2, this type of coating does not exhibit excellent barrier properties at dry conditions (i.e., o% RH), though it has a pretty good resistance to the water vapor, which is the reason for the limited increase of the OTR values at higher relative humidity conditions. The explanation accounts for the chemical structure of the gelatin molecule, which is composed by a sequence of amino acids, among them those hydrophobic like phenylalanine, valine, leucine, isoleucine, and methionine are responsible for the humidity resistance. Therefore, is can be understood as the selection of the starting polymer plays a fundamental role in the definition of the ultimate properties of the coating. In particular, such a kind of coating (i.e., having these specific properties) can find application when is not required a total barrier to gas while maintaining a relatively constant barrier property as the external humidity increases. Finally, it has to be noticed as the coating deposition does not affect the transparency of the plastic substrate (OPP 20 $\mu$m).
**Example 2**. It illustrates the oxygen barrier property of a 2.0 $\mu$m thick coating totally obtained from pectin as a bio-macromolecule. As depicted in Figure 3, at 0% RH the barrier property of such a molecule is higher than gelatin. However, the effect due to the external relative humidity is greater, since the increase in the OTR values moving from 0% to 80% RH is more marked. This type of coating might be used when is required a total barrier to oxygen permeation at external anhydrous conditions. Further application could be the packaging of sliced vegetables, which require the possibility of modulating the exchange of $O_2$ and $CO_2$ with the external environment as a function of the respiration kinetic. Also this kind of coating does not affect the transparency of the plastic substrate.

**Example 3**. This example aims at highlighting the characteristics of another bio-macromolecule, chitosan, in terms of barrier property against oxygen. As reported in Figure 3, this biopolymer exhibits intermediate OTR values at dry and wet conditions compared to gelatin and pectin. As a consequence, this kind of coating might by profitably used in the medical field, for the packaging of specific devices which requires, for safety reasons, the use of ethylene oxide. In particular, the efficacy of the ethylene oxide-based treatment strictly depends on the hygrometric conditions within the sterilization chamber (usually an autoclave). The best recognized performance are at RH - 40-60%. Such a bio-coating would allow the permeation of the sterilizing gas across the plastic substrate and its removal once the bactericide effect took place and this because of the medium-high relative humidity conditions. Once the trigger ceases, i.e. the relative humidity values are brought back to the original conditions, the coating would recover its physical properties, which make it possible its function as a barrier against gases. Also in this case, the chitosan-based coating does not modify the original transparency of the substrate.

**Example 4**. It is here highlighted the effect arising from the addition of a small amount (0.1 wt%) of ethylenvinyl alcohol as a structuring agent within the formulation according to the Example 2, where the bio-macromolecule used is pectin. As displayed in Figure 5, the structuring agent leads to a more performing coating, in the sense that it is able to withstand higher relative humidity values. The final result is a more pronounced capability of maintaining high oxygen barrier properties even at the highest external humidity conditions. The transparency of the final structure appears also in this case excellent.

**Example 5**. Figure 6 shows what happen when adding a small amount (1.0%) of the reinforcing agent (TEOS) to the formulation according to the Example 3. The OTR values of a 20 $\mu$m polypropylene film are kept at excellent values also at high humidity conditions, due to the role of TEOS as water resistant component. Also in this case the final structure has an excellent transparency.

**Example 6**. This last example contains the relevant aspects arising from the simultaneous use of the natural, synthetic organic and inorganic components to produce the high gas barrier coatings. The composition of such a solution is reported in Table 1 (last row). Figure 7 reports the oxygen barrier properties of a 12 $\mu$m polyethylene terephthalate (PET) after the deposition of a 2 $\mu$m hybrid coating. As it can be seen, the major benefit is given by very low oxygen barrier properties even at 50% relative humidity. These properties, however, are roughly maintained at also 80% RH, due to the synergic effect of the three different components. One potential application of this type of coating could be the packaging of food items stocked at high relative humidity values (for example, meat products in the refrigerators of the markets) requiring a high protection against oxygen permeation. Although the more complex structure of this coating, the final optical properties (in terms of transparency) of the substrate are not affected also in this case.

Even though this invention has been described with reference to specific and preferred examples, it has to be intended as not limited to the above examples, rather as a body that can be changed and improved through modifications that to be handled by the mean technician in the field, fall within the domain of this invention.

**Claims**

1. Use of a coating basically from natural macromolecules having gas barrier properties for modulating the external relative humidity-triggered gas barrier property of a plastic substrate, wherein the coating is directly applied to said plastic substrate and said coating is in contact with said external relative humidity.

2. Use according to claim 1, wherein said natural macromolecules are proteins and/or polysaccharides and are selected from the group consisting of gelatin, chitosan, chiton, pectin, gluten, casein, zein, whey protein, carrageenan, guar gum, alginates, starch and cellulose in its different derivative forms.

3. Use according to claim 2, wherein said natural macromolecules are accompanied by organic or inorganic components selected among the following: vinyl polymers, metal alkoxides, inorganic clays catalyst and solvent.

4. Use according to claim 3, wherein said vinyl polymer is the ethylenvinyl alcohol having hydrolysis degree between 80% and 100%.

5. Use according to claim 3, wherein the metal alkoxides have general formula M' (OR') where M' is an atom selected between silicium and alluminum, R$^1$ being an alkyl group.

6. Use according to claim 3, wherein the inorganic component is selected among mica, cloisite, bentonite, vermiculite, kaolin, dellite.

7. Use according to claim 3, wherein the organic component is the bi-carboxilic oxalic acid $(COOH)_2$ in concentration

ranging between 0.001 and 0.1M.

8. Use according to claim 3, wherein the solvent is water.

9. Use according to claim 2, wherein the amount of said protein or polysaccharide is comprised between 0.1 wt and 20% wt when used alone, whereas, if used simultaneously, the amount of polysaccharide to be used (y) is function of the amount of the protein (x) and is defined by the following expression:

$$y = f\left(x_{prot.}\right) = \frac{\sqrt{x-1}}{x} \pm 0.2\%$$

10. Use according to claim 3, and 8, wherein the amount of vinyl polymer is between 0.1 and 20% of the total weight of the starting water solution, and the molar ratio metal alkoxide: water is between 1:1 and 1:7.2.

11. Method to prepare coatings for the use according the previous claims, **characterized by** the following steps wherein:

a) is prepared a water solution of the natural component, using distilled water as sole solvent;
b) is prepared a water solution of the vinyl component;
c) is prepared an acidic water solution of the metal alkoxide;
d) solutions a) - c) are mixed together, previously blending a) and b), which were kept in contact for at least one hour; later on, solution c) is added to the so obtained blend a) + b) in order to obtain the final water solution that can be directly applied onto different plastic substrates in the form of thin coatings.

## Patentansprüche

1. Verwendung einer Beschichtung von natürlichen Makromoleküle mit Gassperreigenschaften zur Modulation der externen relativen Feuchtigkeit ausgelöste Gasbarriereeigenschaft eines Kunststoffsubstrats, wobei die genannte Beschichtung direkt um das Kunststoffsubstrat angewendet wird, und dieselbe Beschichtung in Kontakt mit der externen relativen Luftfeuchtigkeit ist.

2. Verwendung nach Anspruch 1, wobei die natürlichen Makromoleküle Proteine und/oder Polysaccharides sind und aus der Gruppe bestehend aus Gelatine, Chitosan, Chiton, Pektin, Gluten Casein, Zein, Molkeprotein, Carrageenan, Guar-Gum, Alginate, Stärke, und aus Cellulose in seinen verschiedenen Abgeleitet Formen ausgewählt wird.

3. Verwendung nach Anspruch 2, wobei genannte natürlichen Makromoleküle mit organischen oder anorganischen Komponenten begleitet sind die aus dem Gruppe von Vinylpolymere, Metallalkoxiden, anorganischen Tonen Katalysator und Lösungsmittel ausgewählt sind.

4. Verwendung nach Anspruch 3, wobei genannter Polymer das ethilenvinyl Alkohol ist welche ein Hydrolysegrad zwischen 80% und 100% hat.

5. Verwendung nach Anspruch 3, wobei die Metallalkoxide die allgemeine Formel $M^1 (OR)^1$ haben, $M^1$ ein Atom zwischen Silizium und Aluminium ist, und $R^1$ ein Alkylgruppe ist.

6. Verwendung nach Anspruch 3, wobei die anorganische Komponente zwischen Glimmer, Cloisite, Bentonit, Vermiculit, Kaolin, Dellite ausgewählt ist.

7. Verwendung nach Anspruch 3, wobei die organische Komponente id die bi-carboxilic, Oxalsäure $(COOH)_2$ in Konzentration von 0.001 zu 0.1M ist

8. Verwendung nach Anspruch 3, wobei das Lösungsmittel Wasser ist.

9. Verwendung nach Anspruch 2, wobei die Menge des Proteins oder Polysaccharide sich zwischen 0.1 Gew.% und 20 Gew% beträgt wenn die genannte Komponente gleichzeitig verwendet werden, die Menge (y) von Polysaccharide in Abhängigkeit von der Menge des Protein (x) ist und durch den folgenden Ausdruck definiert wird:

$$y = f\left(x_{prot.}\right) = \frac{\sqrt{x-1}}{x} \pm 0.2\%$$

**10.** Verwendung nach Anspruch 3 und Anspruch 8, wobei die Menge von Vinyl-Polymer zwischen 0,1 und 20% des Gesamtgewichts des Ausgangmaterials der Wasser-Lösung eingeschlossen ist und das Molverhältnis Metallalkoxid: Wasser zwischen 1:1 und 1:7.2 eingeschlossen ist.

**11.** Methode zur Herstellung von Beschichtungen für die Verwendung nach die folgenden Schritten der vorherigen Ansprüche:

a) - eine wässrige Lösung des natürlichen Komponente wird unten Verwendung von destillierten Wasser als einziges Lösungsmittel vorbereitet;
b) - eine Wasser -Lösung des Vinyl - Komponenten wird hergestellt;
c) - eine säure wässrige Lösung des Metallalkoxids wird vorbereitet;
d) - Lösungen a) - c) werden miteinander vermischt, zuvor mischen a) und b) die in Kontakt für mindesten eine Stunde gehalten wurden, später, Lösung c) wird zu der so erhaltenen Mischung a) + b) zugegeben um die endgültigen Wasser - Lösung, die direkt auf verschiedene Kunststoff Substrate können in Form dünner Beschichtungen, erhalten.

## Revendications

**1.** Utilisation d'un revêtement essentiellement à base de macromolécules naturelles, ayant des propriétés de barrière aux gaz, pour moduler l'humidité relative extérieure déclenché par la propriété de barrière aux gaz d'un substrat en matière plastique, dans laquelle le revêtement est appliqué directement au substrat en matière plastique et ledit revêtement est en contact avec ladite humidité relative externe.

**2.** Utilisation selon la revendication 1, dans laquelle lesdites macromolécules naturelles sont des protéines et/ou des polysaccharides et sont choisis dans le groupe constitué par la gélatine, chitosane, chiton, pectine, caséine gluten, zéine, protéine de lactosérum, carraghénane, gomme de guar, alginates, amidon et cellulose dans ses différentes formes dérivées.

**3.** Utilisation selon la revendication 2, dans laquelle lesdites macromolécules naturelles sont accompagnées par des composants organiques ou inorganiques choisis parmi les suivants: polymères vinyliques, alcoxydes métalliques, catalyseur d'argiles inorganiques et solvant.

**4.** Utilisation selon la revendication 3, où ledit polymère vinylique est l'alcool ethylenvinyl ayant un degré d'hydrolyse entre 80% et 100%.

**5.** Utilisation selon la revendication 3, dans laquelle les alcoxydes métalliques ont la formule générale $M^1 (OR^1)$ ou $M^1$ est un atome choisi entre silicium et aluminium, $R^1$ étant un groupe alkyle.

**6.** Utilisation selon la revendication 3, dans laquelle le composant inorganique est choisi parmi mica, cloisite, bentonite, vermiculite, kaolin, dellite.

**7.** Utilisation selon la revendication 3, dans laquelle l'identifiant de composant organique de l'acide oxalique bi-carboxylique $(COOH)_2$ est en concentration comprise entre 0.001 et 0.1M.

**8.** Utilisation selon la revendication 3, dans laquelle le solvant est l'eau.

**9.** Utilisation selon la revendication 2, dans laquelle la quantité de ladite protéine ou polysaccaride est comprise entre 0.1 en poids et 20% en poids lorsqu'elle est utilisé seule tandis que si elle est utilisée simultanément, la quantité de polysaccaride à utiliser (y) est fonction de la quantité de la protéine (x) et est définie par l'expression suivante:

$$y = f\left(x_{prot.}\right) = \frac{\sqrt{x-1}}{x} \pm 0.2\%$$

**10.** Utilisation selon les revendications 3 et 8, dans laquelle la quantité du polymère de vinyle est comprise entre 0.1 et 20% du poids total de la solution aqueuse de départ, et le rapport molaire de l'alcoolate de métal: eau est comprise entre 1:1 et 1:7.2.

**11.** Méthode pour préparer des revêtements pour l'utilisation selon les revendications précédentes, **caractérisée par** les étapes suivantes dans lesquelles:

a) on prépare une solution aqueuse du composant naturel, en utilisant de l'eau distillée comme solvant unique;
b) on prépare une solution aqueuse du composant de vinyle;
c) on prépare une solution aqueuse acide de l'alcoolate de métal;
d) les solutions a) - c) mélangées ensemble, d'abord le mélange précédent de a) et b) en contact qui avaient été maintenu pendant au moins une heure, plus tard la solution c) est ajoutée au mélange ainsi obtenu a) + b) au fin d'obtenir la solution aqueuse final qui peut être directement appliquée sur différent substrats plastiques ayant la forme de minces revêtements.

LOW EXTERNAL RELATIVE HUMIDITY         HIGH EXTERNAL RELATIVE HUMIDITY

**FIG. 1** -Schematic representation of the effect of the external relative humidity on the barrier properties of the biocoating according to the invention

**FIG. 2** -Oxygen Transmission Rate (OTR) values at different relative humidity condition (0%-50%-80%-0%) of a 20 μm oriented polypropylene (OPP) film coated with a 2.0 μm Gelatin biocoating. OTR of uncoated OPP= 1800 ml m$^{-2}$ 24h$^{-1}$

**FIG. 3** - Oxygen Transmission Rate (OTR) values at different relative humidity conditions (0%-50%-80%-0%) of a 20 μm oriented polypropylene (OPP) film coated with a 2.0 μm pectin biocoating. OTR of uncoated OPP= 1800 ml m$^{-2}$ 24h$^{-1}$

**FIG. 4** - Oxygen Transmission Rate (OTR) values at different relative humidity conditions (0%-50%-80%-0%) of a 20 μm oriented polypropylene (OPP) film coated with a 2.0 μm chitosan biocoating. OTR of uncoated OPP= 1800 ml m$^{-2}$ 24h$^{-1}$

**FIG. 5** - Oxygen Transmission Rate (OTR) values at different relative humidity conditions (0%-50%-80%-0%) of a 20 μm oriented polypropylene (OPP) film coated with a 2.0 μm Pectin/EVOH biocoating. OTR of uncoated OPP= 1800 ml m$^{-2}$ 24h$^{-1}$

**FIG. 6** - Oxygen Transmission Rate (OTR) values at different relative humidity conditions (0%-50%-80%-0%) of a 20 μm oriented polypropylene (OPP) film coated with a 2.0 μm Chitosan/TEOS biocoating. OTR of uncoated OPP= 1800 ml m$^{-2}$ 24h$^{-1}$

**FIG. 7** - Oxygen Transmission Rate (OTR) values at different relative humidity conditions (0%-50%-80%-0%) of a 12 μm polyethyleneterephthalate (PET) film coated with a 2.0 μm Chitosan/PVOH/TEOS biocoating. OTR of uncoated OPP= 1800 ml m$^{-2}$ 24h$^{-1}$

**EP 2 393 890 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007042993 A
- EP 1348747 A1
- US 20020197480 A
- JP 7126419 B
- JP 62295931 B
- WO 2005053954 A